# EUROPEAN PATENT APPLICATION

(11) **EP 4 793 633 A1**
(43) Date of publication of application: **19.08.2026**
(21) Application number: 26154121.3
(22) Date of filing: 26.01.2026
(51) Int. Cl.: G01N 21/88

(54) **SURFACE INSPECTION SYSTEMS AND METHODS**

(30) Priority: 18.02.2025 US 202519055958
(71) Applicant: The Boeing Company, Arlington, VA 22202 (US)
(72) Inventor: Sutherland, Daniel E., Arlington, VA, 22202 (US); Kelsey, William D., Arlington, VA, 22202 (US)
(74) Representative: Hoffmann Eitle

(57) **Abstract**

A surface inspection system (100) for inspecting a surface (102) of a structure (104) and methods for inspecting the surface (102) of a structure (104) are disclosed. In some examples, the surface inspection system (100) includes one or more image sensors (106) having two or more image sensor lines (108), one or more light sources (110), and one or more controllers (112). The one or more controllers (112) are configured to selectively control the one or more image sensors (106) and the one or more light sources (110) to perform an image capture cycle. Performing the image capture cycle comprises sequentially triggering each image sensor line (108) to capture a respective image segment of the surface (102) using each image sensor line (108), and when triggering each image sensor line (108), simultaneously triggering a corresponding configuration of the one or more light sources (110) to illuminate the surface (102) when capturing the respective image segment.

## Description

### FIELD

The present disclosure relates to surface inspection systems and methods.

### BACKGROUND

Interior decorative laminates are used to cover many of the interior surfaces of aircraft including wall panels and luggage stow bins. Surface defects are common on such decorative laminates, which results in a high scrap rate. The surface defects may be very small in size and different types of defects (e.g., structural defects, color defects, texture defects) may only be detectable under certain lighting conditions or when viewed from specific angles. Additionally, replacing the decorative laminates requires significant costs in materials, manufacturing, transportation, energy, and time.

Standard processes for inspecting interior decorative laminates often involve a human inspector looking over the surfaces of the decorative laminates. However, due to the small size of the potential defects and the wide variety of visual appearances of different types of defects, the standard inspection processes are tedious, time consuming, and ineffective.

### SUMMARY

Surface inspection systems for inspecting surfaces of structures are disclosed. In some examples, surface inspection systems include one or more image sensors having two or more image sensor lines, one or more light sources, and one or more controllers. In some examples, the one or more controllers are configured to selectively control the one or more image sensors and the one or more light sources to perform an image capture cycle. Performing the image capture cycle comprises sequentially triggering each image sensor line to capture a respective image segment of the surface using each image sensor line, and when triggering each image sensor line, simultaneously triggering a corresponding configuration of the one or more light sources to illuminate the surface when capturing the respective image segment.

Methods for inspecting surfaces of structures are also disclosed. In some examples, methods include performing an image capture cycle using one or more image sensors comprising two or more image sensor lines and one or more light sources directed at the surface. In some examples, performing the image capture cycle comprises, sequentially capturing a respective image segment of the surface using each image sensor line, and when capturing each respective image segment, simultaneously lighting the surface using a corresponding configuration of the one or more light sources.

### BRIEF DESCRIPTION OF THE DRAWINGS

Fig. 1 is a schematic illustration representing surface inspection systems.
Fig. 2 is a flow chart schematically representing methods of inspecting a surface for defects.
Fig. 3 is a schematic illustration representing an example surface inspection system of Fig. 1.
Fig. 4 is a chart illustrating an example image capture cycle performed by the example surface inspection system of Fig. 3.
Fig. 5 is a schematic illustration representing another example surface inspection system of Fig. 1.
Fig. 6 is a chart illustrating another example image capture cycle performed by the example surface inspection system of Fig. 5.
Fig. 7 is a schematic illustration representing another example surface inspection system of Fig. 1.
Fig. 8 is a chart illustrating another example image capture cycle performed by the example surface inspection system of Fig. 7.
Fig. 9 is a perspective view of an example surface inspection system of Fig. 1.
Fig. 10 is another perspective view of the example surface inspection system of Fig. 9.

### DESCRIPTION

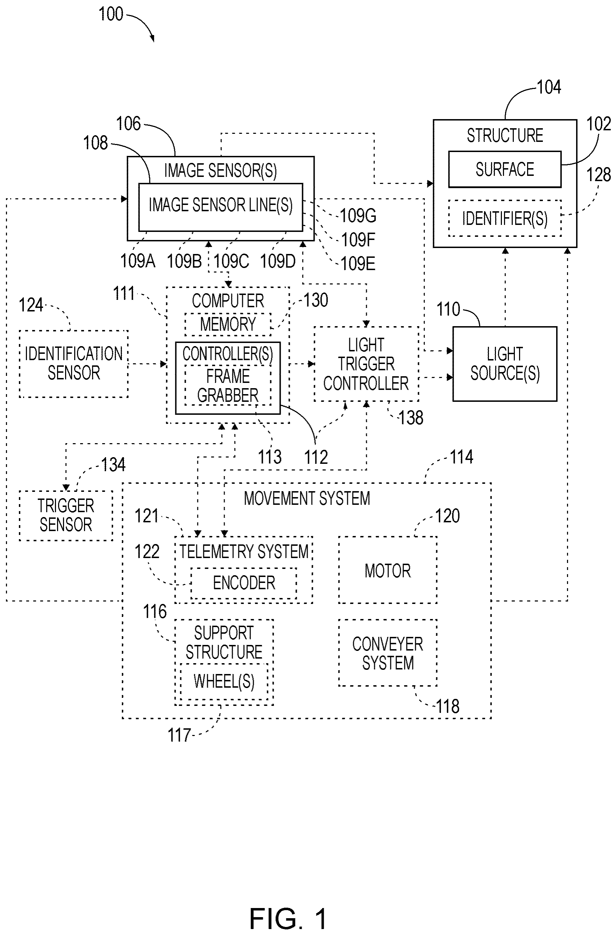

Surface inspection systems and methods for inspecting surfaces are disclosed. Generally, in Fig. 1, elements that are likely to be included in a given example are illustrated in solid lines, while elements that are optional or that correspond to specific examples are illustrated in broken lines. However, elements that are illustrated in solid lines are not essential to all examples of the present disclosure, and an element shown in solid lines may be omitted from a particular example without departing from the scope of the present disclosure.

As schematically illustrated in Fig. 1, surface inspection systems 100 are configured to facilitate capturing images of a surface 102 of a structure 104 and identifying defects on the surface 102 in the captured images. Surface inspection systems 100 may be utilized to identify defects in surface texture, surface structure (e.g., surface depressions or protrusions), surface color, surface pattern, and/or to identify any other abnormalities on the surface 102. Surface inspection systems 100 may be utilized to inspect laminate structures, metal structures, circuit boards, solar panels, and/or any other structure(s) 104. In some examples, surface inspection systems 100 are utilized to image and inspect substantially planar surfaces, non-planar surfaces, such as surfaces of cylindrical structures or other curved or rounded surfaces, and/or any other surfaces 102 having any suitable curvature. In some examples, the surface 102 includes specific surface color(s), surface texture(s), surface pattern(s) (e.g., a specific printed top sheet and/or embossment), etc. In some examples, surface inspection systems 100 are configured to be utilized to inspect decorative laminate structure(s) that are used to form portions of an interior of an aircraft, e.g., wall panels and stow bins.

Surface inspection systems 100 comprise one or more image sensors 106 each configured to capture images of the surface 102. The one or more image sensors 106 collectively include two or more image sensor lines 108 and each of the image sensor lines 108 is configured to independently capture respective images or image segments of the surface 102. For example, surface inspection systems 100 may comprise one or more of the image sensor(s) 106 each comprising multiple of the image sensor lines 108. In some examples, surface inspection systems 100 comprise a plurality of the image sensors 106 each comprising an individual one of the image sensor lines 108 and/or multiple image sensor lines 108, such that the plurality of the image sensors 106 collectively comprise the two or more image sensor lines 108. The image sensor(s) 106 may be oriented at any suitable angle relative to the surface 102 and may be configured to capture images at any suitable angle of reflection relative to the surface 102. For example, one or more of the image sensor(s) 106 may be oriented normal to the surface 102 and/or one or more of the image sensor(s) 106 may be oriented at an acute angle relative to the surface 102.

The image sensor(s) 106 may comprise any suitable image capturing device(s) including one or more of the image sensor lines 108. In some examples, the image sensor(s) 106 comprise a line-scan camera, an area-scan camera, and/or any other suitable device(s) including a respective row or multiple rows of pixels forming each respective image sensor line 108. In some examples, each image sensor line 108 is configured to capture a plurality of image segments of the surface 102, when the surface 102 and the image sensor line 108 are moved relative to each other. The plurality of captured image segments may then be combined to form a complete image of the surface 102.

In some examples, each of the image sensor lines 108 has a specific wavelength sensitivity range comprising a range of wavelengths of light that the specific image sensor line 108 is sensitive to or is configured to detect. The specific wavelength sensitivity range of each of the image sensor lines 108 may peak or be greatest at a specific wavelength of light or peak within a specific range of wavelength(s) of light. As a non-limiting example, the image sensor line(s) 108 may comprise one or more of a blue-light image sensor line 109A having a respective wavelength sensitivity range that peaks within a blue-light wavelength range (e.g., 400-500 nanometers), a green-light image sensor line 109B having a respective wavelength sensitivity range that peaks within a green-light wavelength range (e.g., 500-600 nanometers), a red-light image sensor line 109C having a respective wavelength sensitivity range that peaks within a red-light wavelength range (e.g., 600-700 nanometers), an infrared-light image sensor line 109D (e.g., a near-infrared or NIR-light image sensor line) having a respective wavelength sensitivity range that peaks within an infrared wavelength range or a subset of the infrared wavelength range (e.g., 780 nanometers to 1 millimeter)), and/or an ultraviolet-light image sensor line 109G having a respective wavelength sensitivity range that peaks within an ultraviolet-light wavelength range (e.g., 250-400 nanometers). In some examples, the infrared-light image sensor line 109D comprises a near-infrared or NIR-light image sensor line that has a wavelength sensitivity range that covers a portion of or an entirety of the near-infrared wavelength range of light or near-infrared wavelength spectrum (e.g., 780-2500 nanometers).

In some examples, the image sensor lines 108 comprise one or more monochromatic image sensor lines 109E having a wavelength sensitivity range that covers the visible light spectrum including blue wavelength light, green wavelength light, and red wavelength light. In some examples, one or more of the monochromatic image sensor lines 109E comprises a panchromatic image sensor line 109F having a wavelength sensitivity range covering the visible light spectrum, the ultraviolet light spectrum, and/or the infrared light spectrum.

The above-described examples of the image sensor lines 108 are non-limiting and the image sensor(s) 106 of surface inspection systems 100 may have any suitable image sensor lines 108 that are sensitive to or configured to detect any suitable wavelength(s) or wavelength ranges of light. In some examples, one or more of the image sensor lines 108 have a wavelength sensitivity range that has multiple sensitivity peaks or bandpass lobes. As a non-limiting example, the blue-light image sensor line 109A may have a wavelength sensitivity range that has a first sensitivity peak, or first bandpass lobe, within the blue-light wavelength range (e.g., 400-500 nanometers) and a second sensitivity peak, or second bandpass lobe, at or within a second wavelength range of light (e.g., 800-900 nanometers). In such examples, the blue-light image sensor line 109A may have variable sensitivity to wavelengths of light between or outside of the first and second peak sensitivities or bandpass lobes. Alternatively, or additionally, any of the other image sensor lines (e.g., green, red, infrared-light image sensor lines 109B-D) may have respective wavelength sensitivity ranges having one or multiple of the sensitivity peaks.

In some examples, in addition to having a greatest or peak sensitivity to a specific wavelength range of light, each of the different image sensor lines 109A-109F comprises sidelobe sensitivity across a wide range of wavelengths of light. For example, the green-light image sensor line 109B may have a greatest sensitivity (e.g., a main lobe sensitivity) to green wavelengths of light (e.g., 500-600 nanometer wavelengths), but also have lesser sidelobe sensitivity to blue, red, and infrared wavelengths of light. In some examples, each of the two or more image sensor lines 108 has a wavelength sensitivity range that peaks at a different wavelength of light than the other image sensor lines 108 of the image sensor(s) 106 and a sidelobe sensitivity that overlaps with the wavelength sensitivity ranges of one or more of the other image sensor lines 108.

Surface inspection systems 100 comprise one or more light sources 110 each configured to emit light directed at the surface 102. In some examples, surface inspection systems 100 comprise a plurality of the light sources 110 disposed at select positions relative to the surface 102, such that each of the light sources 110 is configured to emit light at a respective angle of incidence relative to the surface 102. For example, one or more of the light source(s) 110 may be configured to emit light at a relatively low angle of incidence relative to the surface 102 (e.g., less than 45 degrees) to facilitate dark field lighting of the surface 102. In some examples, one or more of the light source(s) 110 are configured to emit light at a relatively high angle of incidence relative to the surface 102 (e.g., greater than 45 degrees) to facilitate bright field lighting of the surface 102. In some examples, one or more of the light source(s) 110 are disposed on a left side of the image sensor(s) 106, a right side of the image sensor(s) 106, behind the structure 104 relative to the image sensor(s) (106), and/or in front of the structure 104 relative to the image sensor(s) 106. One or more of the light source(s) 110 being disposed behind the structure 104 relative to the image sensor(s) 106 facilitates back lighting the surface 102. The light source(s) 110 may be configured to emit any suitable wavelength(s) of light. In some examples, one or more of the light source(s) 110 are configured to emit red light, blue light, green light, infrared light, ultraviolet light, white light, polarized light, and/or any other suitable wavelength(s) of light.

Surface inspection systems 100 comprise one or more controllers 112 configured to selectively control the image sensor(s) 106 and/or the light source(s) 110 to capture respective image segments of the surface 102. The controller(s) 112 may be any suitable device or devices that are configured to perform the functions of the controller(s) 112 discussed herein. For example, the controller(s) 112 may include one or more of an electronic controller, a dedicated controller, a special-purpose controller, a special-purpose computer, a display device, a logic device, a memory device, and/or a memory device having non-transitory computer-readable media suitable for storing computer-executable instructions for implementing aspects of surface inspection systems 100 according to the present disclosure.

In some examples, surface inspection systems 100 further comprise one or more computer(s) 111 (e.g., a personal computer). The computer(s) 111 may include, or be configured to read, non-transitory computer readable storage, or memory, media suitable for storing computer-executable instructions, or software, for implementing methods or steps of methods according to the present disclosure. Examples of such media include CD-ROMs, disks, hard drives, flash memory, etc. For example, as shown in Fig. 1, one or more of the controller(s) 112 and/or the computer(s) 111 may comprise a memory 130 (e.g., any suitable memory device) having non-transitory computer-readable media suitable for storing computer-executable instructions, or software, that are configured to be executed by the controller(s) 112 and/or the computer(s) 111 to implement and/or perform aspects of surface inspection systems 100 and/or methods 200 discussed herein.

In some examples, the controller(s) 112 comprise a frame grabber 113 configured to communicate with and control the image sensor(s) 106 and/or the light source(s) 110. In some examples, as described further below, the frame grabber 113 is configured to trigger the individual image sensor lines 108 of the image sensor(s) 106 to capture image segments of the surface 102 and/or trigger one or more of the light source(s) 110 to strobe on and off synchronized with the image sensor lines 108 capturing the respective image segments of the surface 102. In some examples, the frame grabber 113 provides an interface between the image sensor(s) 106 and/or the light source(s) 110 and the computer(s) 111. For example, the frame grabber 113 may be configured to facilitate storing the image segments captured by the image sensor lines 108 into the memory 130 of the computer(s) 111. In some examples, the frame grabber 113 is configured to execute computer-executable instructions stored in the memory 130 to facilitate controlling the image sensor(s) 106 and/or the light source(s) 110 in a desired manner based on a specific type of the structure 104 being imaged.

In some examples, the controller(s) 112 comprise a light trigger controller 138 configured to control the strobing on and off of the light source(s) 110 synchronized with image segment capture by the image sensor line(s) 108. In such examples, the light trigger controller 138 receives control signals from one or more of the frame grabber 113, the image sensor 106, and/or an encoder 122 indicating when and which of the light source(s) 110 to turn on and a period of time in which to turn on the light source(s) 110.

The controller(s) 112 are configured to selectively control the image sensor(s) 106 and the light source(s) 110 to perform one or more image capture cycles. To perform an image capture cycle, the controller(s) 112 are configured to sequentially trigger each of the image sensor lines 108 of the one or more image sensor(s) 106 to capture a respective image segment of the surface 102 using each image sensor line 108, and when triggering each image sensor line 108, the controller(s) 112 are configured to simultaneously trigger a corresponding configuration of the light source(s) 110 to illuminate the surface 102 when capturing the respective image segment. In other words, the controller(s) 112 are configured to synchronize triggering each image sensor line 108 to capture respective image segments of the surface 102 with triggering a corresponding configuration of the light source(s) 110 to emit light to illuminate the surface 102. Performing the image capture cycle is configured to facilitate capturing a plurality of respective image segments of the surface, one image segment with each of the image sensor lines 108, and using a desired lighting configuration when capturing each of the respective image segments. In some examples, the image capture cycle is repeated to capture a plurality of respective image segments of the surface 102 using each of the image sensor lines 108.

In some examples, the controller(s) 112, e.g., the frame grabber 113 and/or the light trigger controller 138, are configured to adjust one or more variables when performing the image capture cycle(s) dependent on a type of the structure 104 being imaged and/or the specific types of defects that surface inspection systems 100 are being utilized to detect on the surface 102. For example, surface inspection systems 100 may be utilized to detect color defects on the surface 102, structural defects (e.g., depressions or protrusions on the surface 102), texture defects, surface pattern defects, and/or any other abnormalities on the surface 102. Adjusting one or more variables of the image capture cycle, such as the wavelength(s) of light emitted by the light source(s) 110, the angle of incidence of the light emitted by the light source(s) 110 relative to the surface 102, the wavelength sensitivity range of the image sensor lines 108 capturing the respective image segments, an exposure length of the image sensor lines 108 when capturing the respective image segments, and/or any other suitable variables facilitates identifying different types of defects on different types of structures.

As a non-limiting example, surface inspection systems 100 may be utilized to identify a white ink void (e.g., a color defect) on an otherwise blue surface 102. In such examples, using blue light to illuminate the generally blue surface 102 when capturing the respective image segment may cause the white ink void to match the blue sections of the surface 102 in tonality. As a result, the white ink void may be undetectable in the image segment captured when the surface 102 is illuminated by the blue light. In such examples, using red light to illuminate the surface instead may cause the blue sections of the surface to appear darker than the white ink void, which facilitates detecting the white ink void in the captured image segment. Thus, adjusting one or more variables of the image sensor(s) 106 and/or the light source(s) 110 when performing the image capture cycle facilitates identifying different types of defects on different types of structures.

In some examples, the controller(s) 112 are configured to adjust one or more variables of the image sensor(s) 106 when triggering each of the image sensor lines 108 to capture the respective image segments during the image capture cycle. For example, the controller(s) 112 may sequentially trigger each of the image sensor lines 108 in a predetermined order, e.g., the controller(s) 112 may trigger a blue-light image sensor line 109A first, followed by a green-light image sensor line 109B, followed by a red-light image sensor line 109C, followed by an infrared-light image sensor line 109D, and so on. Additionally, or alternatively, the controller(s) 112 may adjust an exposure length of the different image sensor lines 108 when capturing the respective image segments using the different image sensor lines 108. For example, the controller(s) 112 may control an infrared-light image sensor line 109D to have a greater exposure length than a red-light image sensor line 109C or vice versa.

In some examples, the controller(s) 112 are configured to adjust the corresponding configuration of the light sources 110 utilized to illuminate the surface 102 when capturing the respective image segments. For example, the corresponding configuration of the light source(s) 110 used when capturing each respective image segment may be based on characteristics of the specific image sensor line 108 capturing the respective image segment (e.g., the wavelength sensitivity range of the image sensor line 108), characteristics of the surface 102 being imaged (e.g., surface color, surface texture, material, etc.), and/or the type(s) of defects that are desired to be detected on the surface 102 in the respective image segment.

In some examples, the controller(s) 112 are configured to trigger a different configuration of the light source(s) 110 when capturing different respective image segments during the image capture cycle. For example, when capturing a first image segment using a first one of the image sensor lines 108 (e.g., the blue-light image sensor line 109A), the corresponding configuration of the light source(s) 110 triggered by the controller(s) 112 comprises a first light source 110 that emits a first wavelength of light at a low angle of incidence (e.g., less than 45 degrees) relative to the surface 102. When subsequently capturing a second image segment using a second one of the image sensor lines 108 (e.g., the green-light image sensor line 109B), the corresponding configuration of the light source(s) 110 triggered by the controller(s) 112 comprises a second light source 110 that emits a second wavelength of light at a relatively high angle of incidence (e.g., greater than 45 degrees) relative to the surface (102). In this example, the first and second wavelengths of light may be the same or different than each other.

In some examples, the controller(s) 112 are configured to adjust the wavelength(s) of light and the angle of incidence of the light utilized to illuminate the surface 102 when capturing different respective image segments by turning on different corresponding configurations of the light source(s) 110. The corresponding configuration of the light sources(s) 110 utilized to illuminate the surface 102 when capturing the respective image segments may include an individual one of the light source(s) 110 or multiple light sources 110 each emitting light at a respective angle of incidence relative to the surface 102 simultaneously.

In some examples, the corresponding configuration of the one or more light sources 110 that is triggered when capturing at least one of the respective image segments during the image capture cycle comprises a bright field lighting configuration. The bright field lighting configuration comprises a selection of one or more of the light sources 110, each of which is configured to emit light at a relatively high angle of incidence relative to the surface 102, e.g., at an angle of incidence greater than 45 degrees relative to the surface 102. In such examples, the selection of the one or more light sources 110 included in the bright field lighting configuration may include one or more light sources 110 disposed on a right side of the image sensor(s) 106 and/or one or more light sources 110 disposed on a left side of the image sensor(s) 106.

In some examples, the corresponding configuration of the one or more light sources that is triggered when capturing at least one of the respective image segments during the image capture cycle comprises a dark field lighting configuration. The dark field lighting configuration comprises a selection of one or more of the light sources 110 each of which is configured to emit light at a relatively low angle of incidence relative to the surface 102, e.g., an angle of incidence less than 45 degrees relative to the surface 102. In such examples, the selection of the one or more light sources 110 included in the dark field lighting configuration may include one or more light sources 110 disposed on a right side of the image sensor(s) 106 and/or one or more light sources 110 disposed on a left side of the image sensor(s) 106.

In some examples, the corresponding configuration of the one or more light sources triggered when capturing at least one of the respective image segments during the image capture cycle comprises a combined dark field and bright field lighting configuration. The combined dark field and bright field lighting configuration includes at least a first one of the light sources 110 that is configured to emit light at a first angle of incidence relative to the surface that is greater than 45 degrees and at least a second one of the light source 110 that is configured to emit light at a second angle of incidence relative to the surface that is less than 45 degrees. The first one of the light sources 110 and the second one of the light sources 110 may be disposed on the same side of the image sensor(s) 106 as each other, or on opposite sides of the image sensor(s) 106 as each other.

In some examples, at least one of the light source(s) 110 is disposed behind the structure 104 relative to the image sensor 106 to facilitate back lighting the surface 102 when capturing one or more of the respective image segments. In some examples, one or more of the light source(s) 110 are disposed in front of the structure 104 relative to the image sensor 106 to facilitate front lighting of the surface 102 when capturing one or more of the respective image segments.

In some examples, the memory 130 stores information relating to performing the image capture cycle for different types of structures 104. For example, dependent on the specific type of the structure being imaged, adjusting one or more of the above-described variables may facilitate identifying particular types of defects on the surface 102 of the specific type of the structure 104. In some examples, the memory 130 stores a plurality of image cycle data sets each corresponding to a specific type of the structure 104 that is configured to be inspected and imaged by surface inspection systems 100. In some examples, each image cycle data set comprises computer-executable instructions configured to be executed by the controller(s) 112 (e.g., the frame grabber 113 and/or the light trigger controller 138) to perform the image capture cycle when imaging the specific type of the structure 104 corresponding to the image cycle data set. In some examples, each image cycle data set comprises computer-executable instructions indicating to the controller(s) 112 a predetermined order in which to sequentially trigger the two or more image sensor lines 108 and the corresponding configuration of the light source(s) 110 to simultaneously trigger when capturing each respective image segment during the image capture cycle for the specific type of the structure 104.

In some examples, the controller(s) 112 are configured to control the image sensor(s) 106 and the light source(s) 110 to perform a plurality of the image capture cycles repeatedly at the same time as the image sensor(s) 106 scan over the surface 102 of the structure 104. For example, a movement system 114 may be configured to move one or both of the image sensor(s) 106 and the structure 104 relative to each other. The movement system 114 may be configured to move the image sensor(s) 106 relative to the structure 104 while the structure 104 remains stationary, move the structure 104 relative to the image sensor(s) 106 while the image sensor(s) 106 remains stationary, or move both the structure 104 and the image sensor(s) 106 relative to each other. In some examples, the movement system 114 comprises an electric motor 120 and/or any other suitable device(s) configured to drive the movement system 114 to selectively move the image sensor(s) 106 or the structure 104 relative to the other of the image sensor(s) 106 and the structure 104 at a desired speed.

In some examples, surface inspection systems 100 comprise the movement system 114 and are configured to control the movement system 114 to move the image sensor(s) and the structure 104 relative to each other. For example, one or more of the controller(s) 112 of surface inspection systems 100 may be configured to control the movement system 114 to selectively move the image sensor(s) 106 and/or the structure 104 relative to each other at a desired speed. Alternatively, in some examples, the movement system 114 is separately controlled and the surface inspection systems 100 are configured to image the surface 102 of the structure 104, as the movement system 114 moves the image sensor(s) 106 and/or the structure 104 relative to each other. For example, the controller(s) 112 of surface inspection systems 100 may be configured to control the image sensor(s) 106 and the light source(s) 110 to facilitate performing the image capture cycle, as the image sensor(s) 106 and/or the structure 104 are moved relative to each other by the separately controlled movement system 114.

In some examples, the movement system 114 is configured to move the image sensor(s) 106 while the structure 104 being imaged remains stationary. In some such examples, the movement system 114 comprises a support structure 116 supporting the image sensor(s) 106 and/or the light source(s) 110. In some examples, the support structure 116 is configured to selectively move relative to the structure 104 being imaged and/or the image sensor(s) 106 are operatively coupled to the support structure 116, such that the image sensor(s) 106 are configured to selectively move (e.g., slide or roll) on the support structure 116 relative to the structure 104 being imaged. For example, the support structure 116 may have one or more wheel(s) 117 configured to facilitate rolling the support structure 116 relative to the structure 104 being imaged and/or facilitate moving the image sensor(s) 106 on the support structure 116 relative to the structure 104 being imaged. Alternatively, or additionally, the support structure 116 may be configured to slide relative to the structure 104 (e.g., on tracks) or move relative to the structure 104 being imaged in any other suitable manner. In some examples, the support structure 116 is configured to move relative to the structure 104 being imaged in a first direction, and the image sensor 106 is configured move (e.g., slide or roll) on the support structure 116 relative to the structure 104 being imaged in a second different direction. This facilitates scanning over the surface 102 of the structure 104 in both the first and second directions utilizing the image sensor(s) 106. Alternatively, in some such examples, the movement system 114 may comprise a six degrees of freedom (6DoF) system, or similar, and the image sensor(s) 106 may be coupled to the 6DoF system as an end effector. For example, the image sensor(s) 106 may be attached to a robotic arm configured to selectively move the image sensor(s) 106 relative to the structure 104.

In some examples, the movement system 114 is configured to move the structure 104, while the image sensor(s) 106 remain stationary. For example, the movement system 114 may comprise any suitable conveyer system 118, e.g., a conveyer belt, and the structure 104 may be disposed on the conveyer system 118. In such examples, the conveyer system 118 is configured to selectively move the structure 104 relative to the image sensor(s) 106 at a desired speed. In such examples, the image sensor(s) 106 and/or the light source(s) 110 may be positioned proximate the conveyor system 118 to facilitate imaging the surface 102 of the structure 104, as the structure 104 is moved relative to the image sensor(s) 106 by the conveyer system 118.

In some examples, the movement system 114 further comprises a telemetry system 121 configured to measure relative movement and/or relative positions of the structure 104 and the image sensor(s) 106 when the structure 104 and the image sensor(s) 106 are moved relative to each other by the movement system 114. For example, the telemetry system 121 may comprise an encoder 122 (e.g., a rotary encoder) and/or any other suitable sensor(s) that are operatively coupled to the movement system 114, such that the encoder 122 or other suitable sensor(s) are configured to measure or detect relative movement between the structure 104 and the image sensor(s) 106 when moved relative to each other by the movement system 114. Alternatively, or additionally, telemetry system 121 may comprise any other suitable sensor(s) configured to measure and detect the relative movement between the structure 104 and the image sensor(s) 106.

In some examples, the telemetry system 121 (e.g., the encoder 122) is configured to transmit signal pulses indicating the relative movement and/or the relative positions of the image sensor(s) 106 and the structure 104, when the structure 104 and the image sensor(s) 106 are moved relative to each other by the movement system 114. For example, each of the signal pulses transmitted by the telemetry system 121 may indicate that the image sensor(s) 106 and the structure 104 have moved relative to each other by a specific distance. The transmitted signal pulses therefore indicate a precise position of the surface 102 of the structure 104 relative to the image sensor(s) 106 at a given time.

In some examples, the telemetry system 121 is configured to transmit the signal pulses indicating the relative movement and/or relative positions of the image sensor(s) 106 and the structure 104 to the controller(s) 112 (e.g., the frame grabber 113 and/or the light trigger controller 138) in order to facilitate the controller(s) 112 synchronizing the image capture cycle with the relative movement of the image sensor(s) 106 and the structure 104. For example, the controller(s) 112 may be configured to trigger each image sensor line 108 to capture the respective image segment and the corresponding configuration of the light source(s) 110 to simultaneously illuminate the surface 102 in response to receiving one or more of the signal pulses from the telemetry system 121 indicating that the structure 104 and the image sensor(s) 106 have moved relative to each other by a select distance.

Surface inspection systems 100 disclosed herein may utilize different controller configurations to control the image sensor(s) 106 and the light source(s) 110 to perform the one or more image capture cycle(s). In some examples, surface inspection systems 100 comprise the frame grabber 113 and the light trigger controller 138. In such examples, the frame grabber 113 is configured to sequentially trigger each of the image sensor lines 108 when performing the image capture cycle. In some examples, the frame grabber 113 is configured to sequentially trigger each of the image sensor lines 108 according to computer-executable instructions included in the image cycle data sets stored in the memory 130. In some examples, the frame grabber 113 is configured to simultaneously transmit control signals to the light trigger controller 138 indicating when and which of the light source(s) 110 to strobe on and off synchronized with the triggering of each image sensor line 108. Alternatively, or additionally, the image sensor(s) 106 may be configured to transmit control signals instructing the light trigger controller 138 when and which of the light source(s) 110 to strobe on and off synchronized with the triggering of each image sensor line 108 by the image sensor(s) 106. In response to receiving the control signals from the frame grabber 113 and/or the image sensor(s) 106, the light trigger controller 138 is configured to trigger the corresponding configuration of the light source(s) 110 to strobe on and for the duration of time indicated by the frame grabber 113 and/or the image sensor(s) 106.

In some examples, surface inspection systems 100 do not comprise a light trigger controller 138. In some such examples, the image sensor(s) 106 are configured to trigger the corresponding configuration of the light sources 110 to strobe on and off synchronized with the sequential triggering of each of the image sensor lines 108. For example, the image sensor(s) 106 may be configured to simultaneously trigger the capture of a respective image segment by a respective one of the image sensor lines 108 and the strobing on and off of the corresponding configuration of the light source(s) 110. In some such examples, the image sensor(s) 106 are configured to receive control signals from the frame grabber 113 indicating the order in which to trigger the image sensor lines 108 and the corresponding configurations of the light source(s) 110 to trigger simultaneously when triggering the image sensor lines 108.

In some examples, the frame grabber 113, the light trigger controller 138, and/or the image sensor 106 are configured to receive signal pulses from the telemetry system 121 indicating the relative position and/or relative movement of the image sensor(s) 106 and the structure 104 being imaged. In some examples, the frame grabber 113, the light trigger controller 138, and/or the image sensor(s) 106 are configured to synchronize triggering the image sensor lines 108 and the light source(s) 110 when performing the image capture cycle(s) with the relative movement and/or relative positions of the image sensor 106 and the structure 104. As described above, each of the signal pulses corresponds to a select distance of relative movement between the image sensor(s) 106 and the surface 102 of the structure 104 and indicates the relative positions of the image sensor(s) 106 and the surface 102. In some examples, when the image sensor(s) 106 and the structure 104 are moved relative to each other by the movement system 114, the frame grabber 113, the light trigger controller 138, and/or the image sensor(s) 106 are configured to trigger the image sensor lines 108 and/or the light source(s) 110 in response to receiving one or more of the signal pulses from the telemetry system 121 indicating that the image sensor(s) 106 and the surface 102 have moved relative to each other by a select distance. This prevents distortion in combined images formed by combining the plurality of image segments captured by one or more of the image sensor lines 108 during image processing described further below.

In some examples, surface inspection systems 100 comprise an identification sensor 124 configured to identify the structure 104 being inspected. The identification sensor 124 comprises any suitable device that is configured to detect one or more identifier(s) 128 of the structure 104. For example, the identifier(s) 128 may comprise marking(s) disposed on the structure 104 and/or may comprise marking(s) disposed on an ID card identifying the structure 104. In some examples, the identification sensor 124 comprises a bar code scanner, a QR code scanner, a camera, and/or any other suitable device configured to detect the identifier 128. Likewise, the identifier(s) 128 may comprise a bar code, a QR code, an ArUco marker, and/or any other suitable marking disposed on the structure 104 or that is disposed on an ID card separate from the structure 104.

In some examples, the identifier(s) 128 are configured to be utilized to identify the structure 104 to determine one or more characteristics of the structure 104 and the surface 102 of the structure 104 being inspected, e.g., surface texture, surface pattern, thickness, light transmission properties of the surface 102, graphic prints on the surface 102, reflectivity properties of the surface 102, material, etc. For example, the identification sensor 124 may be configured to scan the identifier(s) 128 to determine a part number and/or the type of the structure 104 being imaged. The controller(s) 112 are configured then to search the memory 130 for information (e.g., an image cycle data set) relating to the identified structure 104. In some examples, the information includes the image cycle data set associated with the identified structure, which includes computer-executable instructions configured to be executed by the controller(s) 112 to perform the image capture cycle(s) to inspect the identified structure 104. In some examples, the identifier(s) 128 are configured to be utilized to determine a spatial position of identified defects on the surface 102. For example, the surface 102 may include one or more of the identifier(s) 128 each having a known spatial position on the surface 102 and the spatial position of defects identified on the surface 102 may be determined relative to the one or more identifier(s) 128.

In some examples, surface inspection systems 100 comprise a trigger sensor 134 configured to detect when the structure 104 is disposed in an imaging position. The trigger sensor 134 is configured to transmit a signal to the controller(s) 112 indicating when the structure is disposed in the imaging position. In some examples, the controller(s) 112 are configured to initiate performance of the image capture cycle(s) in response to the trigger sensor 134 detecting the structure 104 is disposed in the imaging position. The trigger sensor 134 comprises an infrared sensor, pressure sensor, conductive sensor, laser sensor, and/or any other suitable material sensor configured to detect the structure 104 is in the imaging position.

In some examples, surface inspection systems 100 are configured to facilitate processing, combining, and/or analyzing one or more of the image segments captured when performing the image capture cycle(s). For example, as described above, the controller(s) 112 may control the image sensor(s) 106 and the light source(s) 110 to perform a plurality of the image capture cycles at the same time that the image sensor(s) 106 scan over the surface 102. This results in each of the two or more image sensor lines 108 capturing a respective plurality of the respective image segments. As a result of the relative movement between the image sensor(s) 106 and the surface 102, each of the respective image segments of the plurality of the image segments corresponds to a different spatial segment of the surface 102. In some examples, the plurality of image segments captured by one or more of the image sensor lines 108 are processed using filters, enhancements, and/or are combined into one or more combined images of the surface 102. For example, the respective plurality of image segments captured by an individual one of the image sensor lines 108 are combined (e.g., using any suitable image processing software executed by or running on the computer(s) 111) to form a combined image of the structure 104 captured by the individual one of the image sensor lines 108. In some examples, the respective plurality of image segments captured by a first one of the image sensor lines 108 are combined with the respective plurality of image segments captured by one or more of the other image sensor lines 108 to form a combined image of the surface 102 including image segments captured by multiple of the image sensor lines 108. In such examples, the combined image segments may be captured by multiple image sensor lines 108 that are part of the same image sensor 106 or that are part of different image sensors 106.

The processed image segments and/or the combined images may then be analyzed to identify defects on the surface 102. In some examples, surface inspections systems 100 include one or more trained machine learning models configured to detect specific types of defects (e.g., color defects, texture defects, structural defects, texture defects, etc.) in the processed and/or combined images of specific types of structures 104. In such examples, the one or more trained machine learning models are utilized to analyze the processed image segments and/or the combined images that are captured by the image sensor(s) 106 to identify defects on the surface 102 of the structure 104. In some examples, the processed image segments and/or the combined images are stored in the memory 130 and the one or more trained machine learning models are configured to be executed by or run on the computer(s) 111 to analyze the processed images and/or combined images of the surface 102.

The above-described surface inspection systems 100 have several advantages. For example, surface inspection systems 100 described herein facilitate detecting various types of defects, e.g., color defects, surface texture defects, structural defects, etc., on the surface 102, of various types of structures 104 having different characteristics. As described above, different types of defects on different types of surfaces 102 are only identifiable in images captured within specific wavelength ranges of light or images captured when the surface 102 is illuminated by a specific lighting configuration, e.g., bright field lighting configuration, dark field lighting configuration, back lighting, front lighting, different wavelengths of light, etc. Surface inspection systems 100 facilitate capturing multiple images of the surface 102 in a single scan of the surface 102, and each of the images is captured using a sensor having a specific wavelength sensitivity range and is captured when the surface is illuminated by a specific lighting configuration. This facilitates capturing a plurality of images of the surface 102 in a single scan of the surface 102, each of which is captured using conditions that facilitate identifying different types of defects on different types of surfaces 102.

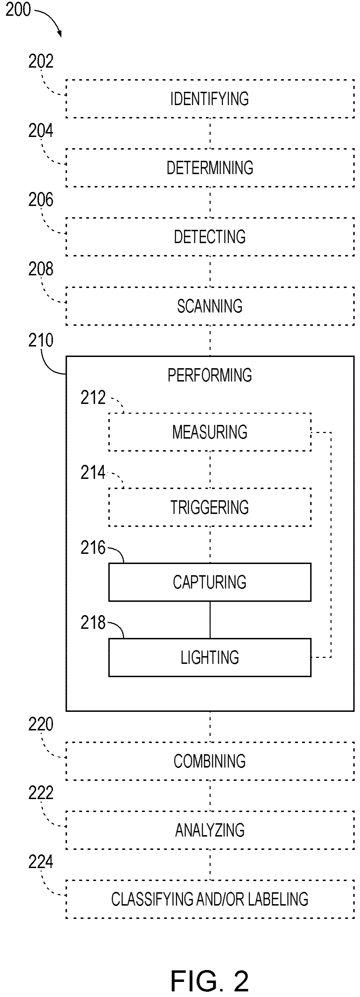

Fig. 2 schematically provides a flowchart that represents illustrative, non-exclusive examples of methods 200 according to the present disclosure. In Fig. 2, some steps are illustrated in dashed boxes indicating that such steps may be optional or may correspond to an optional version of a method according to the present disclosure. That said, not all methods according to the present disclosure are required to include the steps illustrated in solid boxes. The methods and steps illustrated in Fig. 2 are not limiting and other methods and steps are within the scope of the present disclosure, including methods having greater than or fewer than the number of steps illustrated, as understood from the discussions herein.

In some examples, one or more aspects or steps of methods 200 are configured to be performed or implemented by surface inspections systems 100 discussed above with reference to Fig. 1. For example, the controller(s) 112 may be configured to control one or more components of surface inspection systems 100 (e.g., the image sensor(s) 106, light source(s) 110, and/or movement system 114) to perform one or more of the steps of methods 200 discussed below.

As seen in Fig. 2, a method 200 of inspecting the surface 102 of a structure 104 includes performing 210 an image capture cycle. Performing 210 the image capture cycle comprises sequentially capturing 216 a respective image segment of the surface 102 using each image sensor line 108 of one or more image sensor(s) 106. During the capturing 216, the method includes simultaneously lighting 218 the surface 102 using a corresponding configuration of one or more light source(s) 110. As described above, the image capture cycle may be performed by the controller(s) 112 controlling the image sensor(s) 106 and the light source(s) 110 to perform the capturing 216 and the lighting 218. The capturing 216 and the lighting 218 are synchronized in time by the controller(s) 112 to facilitate capturing the respective image segments of the surface 102 at the same time that the surface 102 is illuminated by the corresponding configuration of the light source(s) 110.

In some examples, methods 200 include, prior to performing 210 the image capture cycle, identifying 202 a type of the structure 104 that is being inspected. In some examples, identifying 202 the type of the structure 104 includes scanning an identifier 128 disposed on the structure 104 and/or disposed on an ID card for the structure 104. In some examples, identifying 202 the type of the structure comprises scanning an ID card for the structure 104, which indicates a part number of the structure 104. The part number may be utilized by the controller(s) 112 to determine information relating to the identified structure, e.g., materials, textures, colors, decorative prints, etc., which are stored within a memory 130. In some examples, identifying 202 the type of the structure 104 further comprises scanning an identifier 128 disposed on the structure 104 itself (e.g., a barcode or QR code), which is further utilized to search the memory 130 for information corresponding to the specific identified structure 104.

In some examples, methods 200 include determining 204 one or more variables of the image capture cycle to be performed when inspecting the specific type of structure 104 identified in step 202. For example, after identifying 202 the structure 104, the controller(s) 112 may be configured to determine 204 a predetermined order in which to sequentially trigger the two or more image sensor lines 108 to capture 216 the respective image segments and the corresponding configuration of the one or more light sources 110 used when lighting 218 the surface 102. In some examples, determining 204 further comprises determining an exposure length of each of the image sensor lines 108 when capturing the respective image segments. In some examples, one or more image cycle data sets including computer-executable instructions are stored in the memory 130 and are configured to be executed by the controller(s) 112 to perform the image capture cycle for the specific type of the structure 104 identified in step 202. In some examples, determining 204 comprises searching the memory 130 for the one or more image cycle data sets stored in the memory 130 associated with the type of the structure identified in step 202.

In some examples, methods 200 include detecting 206 that the structure 104 is disposed in an imaging position. In some examples, detecting 206 that the structure 104 is disposed in the imaging position is performed by any suitable trigger sensor 134 (e.g., a laser sensor, infrared sensor, pressure sensor, conductive sensor, etc.) configured to detect when the structure 104 is disposed in the imaging position. In some examples, the structure 104 being disposed in the imaging position indicates that the structure 104 is within a field of view of the imaging sensor(s) 106 and that the controller(s) 112 may initiate and/or prepare to perform 210 the image capture cycle. In some examples, the controller(s) 112 are configured to initiate performing 210 the image capture cycle in response to detecting 206 that the structure is disposed in the imaging position.

In some examples, methods 200 include scanning 208 the surface 102 of the structure 104 using the image sensor(s) 106. For example, a movement system 114 may be utilized to move one or both of the image sensor(s) 106 and the structure 104 relative to each other. In some examples, the scanning 208 the surface 102 of the structure 104 is performed simultaneously with performing 210 one or more of the image capture cycles. In some examples, methods 200 comprise scanning 208 the surface 102 of the structure 104 with the image sensor(s) 106 and repeatedly performing 210 the image capture cycle a plurality of times when the image sensor(s) 106 are scanning 208 the surface 102.

In some examples, performing 210 the image capture cycle further comprises measuring 212 relative movement and/or relative positions of the image sensor(s) 106 and the surface 102 of the structure 104. In some examples, a telemetry system 121 is configured to measure or detect relative movement of the image sensor(s) 106 and the surface 102 when the image sensor(s) 106 scan over the surface 102. For example, as described above, the telemetry system 121 may comprise an encoder 122 and/or any other suitable sensor(s) that are operatively coupled to the movement system 114 and configured to transmit one or more signal pulses to the controller(s) 112 indicating that the image sensor(s) 106 and the surface 102 of the structure 104 have moved relative to each other by a select distance.

In some examples, performing 210 the image capture cycle further comprises triggering 214 the capturing 216 of the respective image segments and the simultaneous lighting 218 of the surface 102 based on the relative movement between the image sensor(s) 106 and the structure 104. For example, the controller(s) 112 may be configured to trigger 214 the capturing 216 and the lighting 218 in response to receiving a select number of the signal pulses from the telemetry system 121 indicating that the surface 102 has moved relative to the image sensor(s) 106 by a select distance. This prevents image distortion in combined images formed when combining 220 a plurality of the image segments captured by one or more of the image sensor lines 108.

In some examples, methods 200 comprise, after performing 210 the image capture cycle once or a plurality of times, combining 220 the plurality of the respective image segments captured by one or more of the image sensor lines 108 to form a combined image of the surface 102. For example, combining 220 may comprise combining the respective plurality of the image segments captured by an individual one of the image sensor lines 108 to form a combined image of the surface 102 captured by the individual one of the image sensor lines 108. Alternatively, or additionally, combining 220 may comprise combining the plurality of the respective image segments captured by multiple different image sensor lines 108 of one or multiple of the image sensor(s) 106 to form a combined image of the surface. For example, the plurality of the image segments captured by each of a blue-light image sensor line 109A, a green-light image sensor line 109B, and a red-light image sensor line 109C may be combined into a single combined image of the surface 102.

In some examples, methods 200 further include analyzing 222 the respective image segments and/or the combined images. In some examples, analyzing 222 the images includes using a trained machine learning model configured to identify defects in the images and/or image segments of the surface 102. In some examples, different machine learning models are trained to identify specific types of defects (e.g., pattern, structural, color defects, etc.) in specific types of images, e.g., images captured within specific wavelength ranges of light or captured using specific lighting configurations. In such examples, multiple machine learning models are utilized to analyze 222 different combined images and/or image segments to identify different types of defects in the different types of combined images. In some examples, the combined images are stored in the memory 130 of the computer(s) 111 and the computer(s) 111 are configured to execute the one or more trained machine learning models to analyze 222 the combined images of the surface 102.

In some examples, methods 200 further include classifying and/or labeling 224 the defects identified in the images. For example, identified defects may be classified and/or labeled based on type of defect (e.g., pattern, texture, structural, color, etc.) and/or based on the type of surface 102 or structure 104 on which the defect was identified. This information may be stored in the memory 130 of surface inspection systems 100 to keep a record of the different types of defects that are identified on different types of structures.

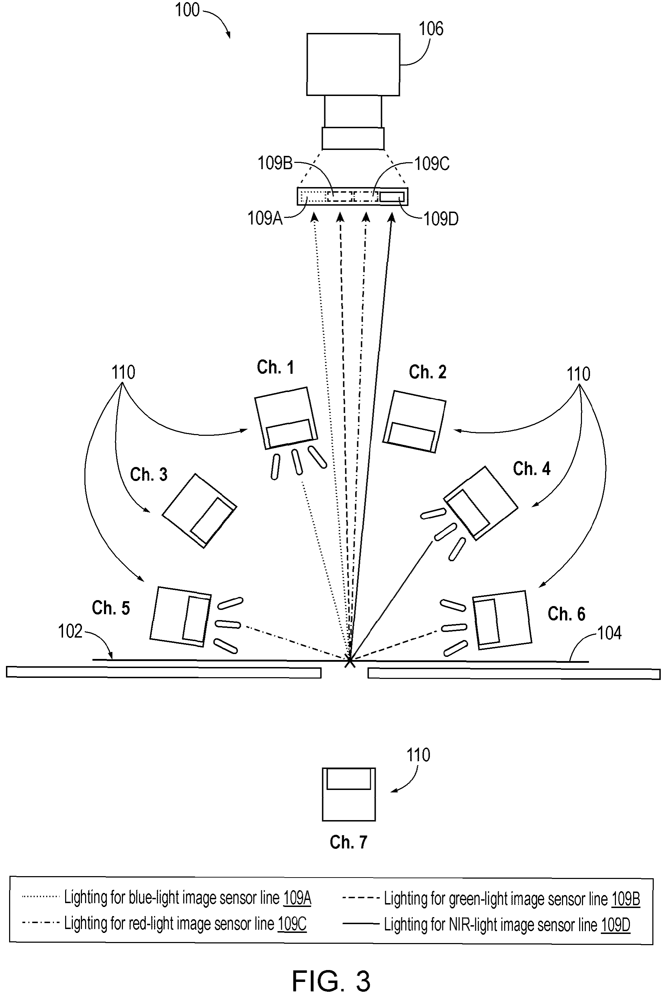

Turning now to Figs. 3-10, illustrative non-exclusive examples of surface inspection systems 100 and methods 200 of inspecting a surface are illustrated. Where appropriate, the reference numerals from the schematic illustrations of Figs. 1-2 are used to designate corresponding parts of the examples of Figs. 3-10; however, the examples of Figs. 3-10 are non-exclusive and do not limit surface inspection systems 100 or methods 200 to the illustrated embodiments of Figs. 3-10. That is, surface inspection systems 100 and methods 200 are not limited to the specific embodiments of Figs. 3-10, and surface inspection systems 100 and methods 200 may incorporate any number of the various aspects, configurations, characteristics, properties, etc. of surface inspection systems 100 and methods 200 that are illustrated in and discussed with reference to the schematic representations of Figs. 1-2 and/or the embodiments of Figs. 3-10, as well as variations thereof, without requiring the inclusion of all such aspects, configurations, characteristics, properties, etc. For the purpose of brevity, each previously discussed component, part, portion, aspect, region, etc. or variants thereof may not be discussed, illustrated, and/or labeled again with respect to the examples of Figs. 3-10; however, it is within the scope of the present disclosure that the previously discussed features, variants, etc. may be utilized with the examples of Figs. 3-10.

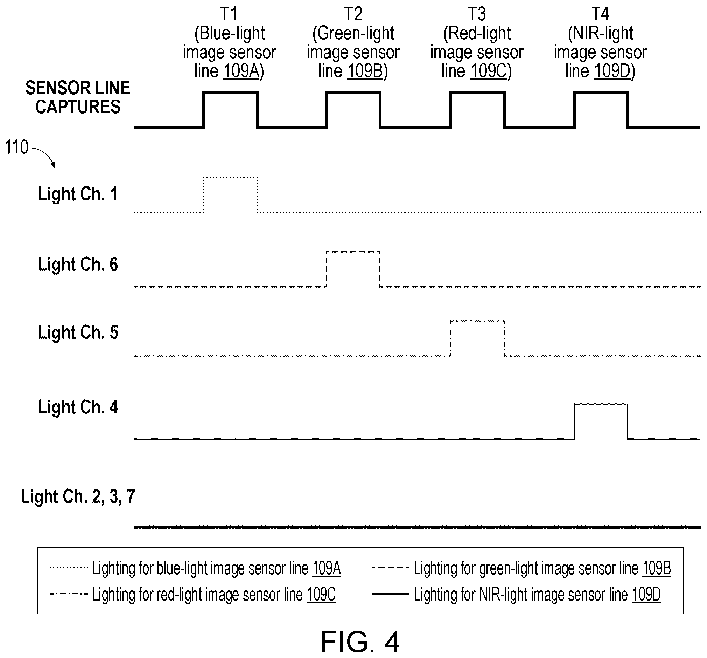

As seen in Fig. 3, surface inspection system 100 is an example of surface inspection systems 100 that includes an image sensor 106 having four image sensor lines 109A, 109B, 109C, and 109D. The four image sensor lines include a blue-light image sensor line 109A that is most sensitive to blue wavelengths of light, a green-light image sensor line 109B that is most sensitive to green wavelengths of light, a red-light image sensor line 109C that is most sensitive to red wavelengths of light, and an NIR-light image sensor line 109D that is most sensitive to near-infrared wavelengths of light. The surface inspection system 100 shown in Fig. 3 further includes seven light sources 110. Light sources 110 each comprise light channels labeled Ch. 1, Ch. 2, Ch. 3, Ch. 4, Ch. 5, Ch. 6, and Ch. 7 in Figs. 3 and 4. In the example of Figs. 3 and 4, each of the light sources 110 is configured to emit white light. However, as described above, in other examples, one or more of the light sources 110 may be configured to emit any suitable wavelength(s) of light.

Figs. 3 and 4 illustrate the surface inspection system 100 performing an image capture cycle in accordance with the present disclosure. As shown in Figs. 3 and 4, at a first time T1, the blue-light image sensor line 109A captures an image segment of the surface 102 and the light channel Ch. 1 simultaneously illuminates the surface by emitting light at a respective angle of incidence relative to the surface 102. Light channel Ch. 1 is positioned to emit light at a relatively high angle of incidence relative to the surface 102 to facilitate bright field lighting of the surface 102 when capturing the image segment using the blue-light image sensor line 109A. At a second time T2, the green-light image sensor line 109B captures an image segment of the surface 102 and the light channel Ch. 6 simultaneously emits light directed at the surface 102 at a respective angle of incidence. As shown in Fig. 3, the light channel Ch. 6 is positioned to emit light at a relatively low angle of incidence relative to the surface 102 to facilitate dark field lighting of the surface 102 when capturing the image segment using the green-light image sensor line 109B. At a third time T3, the red-light image sensor line 109C captures an image segment of the surface 102 and the light channel Ch. 5 simultaneously emits light directed at the surface 102 at a relatively low angle of incidence relative to the surface 102 to facilitate dark field lighting of the surface 102. At a fourth time T4, the NIR-light image sensor line 109D captures an image segment of the surface 102 while light channel Ch. 4 emits light directed at the surface 102 at a respective angle of incidence. Light channel Ch. 4 is disposed in between a bright field and a dark field lighting configuration. In some examples, the above-described image capture cycle is repeated a plurality of times at the same time that the image sensor 106 and the surface 102 are moved relative to each other.

As shown in Fig. 4, the exposure lengths of each of the image sensor lines 109A, 109B, 109C, and 109D when capturing the image segments of the surface 102 are equal to each other. However, in other examples, the exposure lengths of different ones of the image sensor lines 109A, 109B, 109C, and 109D are different than each other. In the example of Figs. 3 and 4, the light sources 110 are timed to strobe on and off for an amount of time equal to the exposure length of the image sensor lines 109A, 109B, 109C, 109D. However, in some other examples, the light sources 110 are strobed on and off for only a fraction of the exposure length of one or more of the image sensor lines 109A, 109B, 109C, 109D, as described further below.

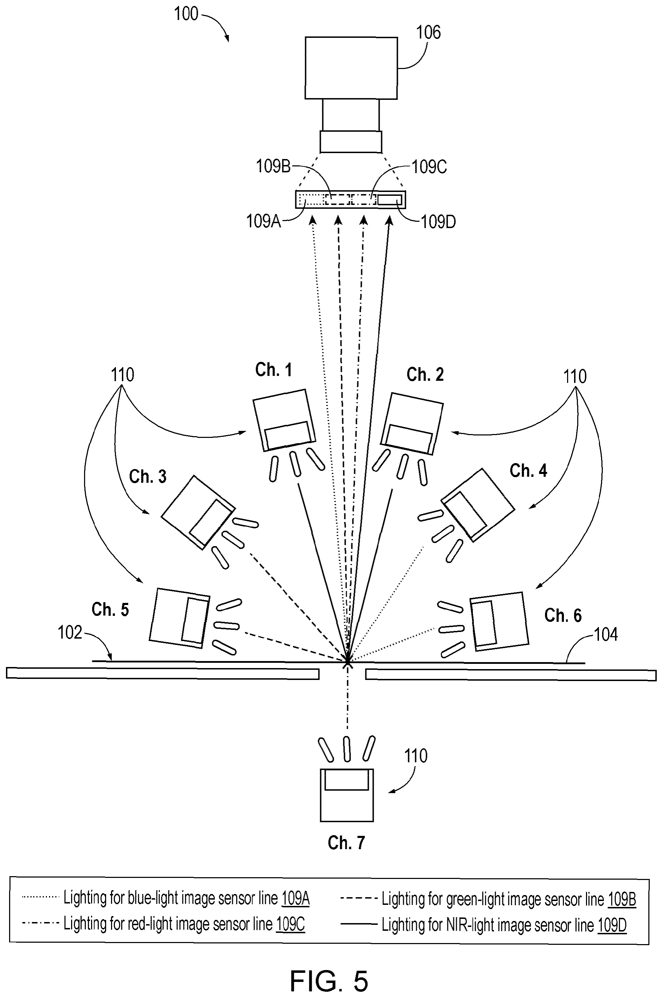

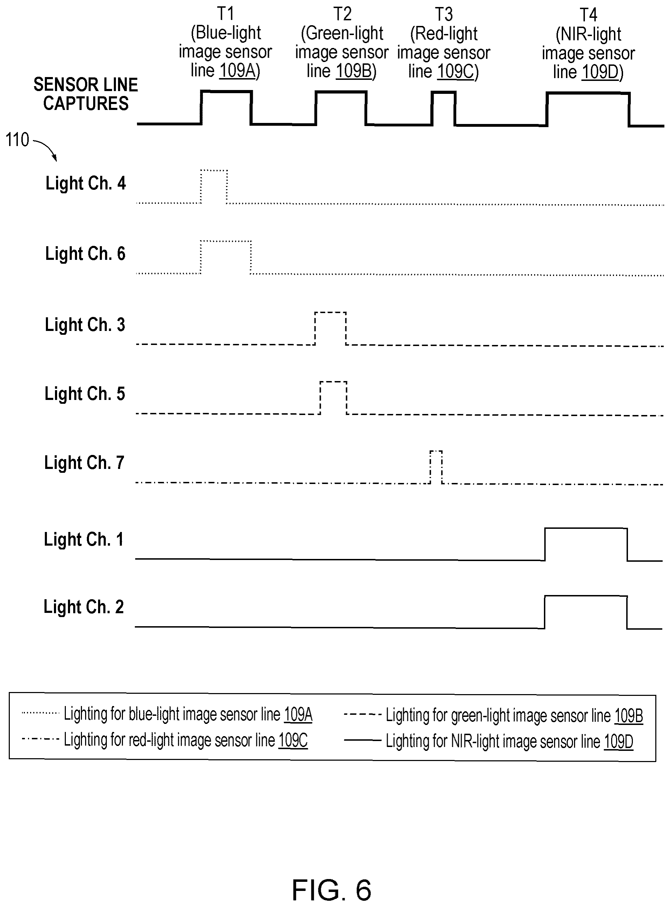

Figs. 5 and 6 illustrate another example surface inspection system 100. The surface inspection system 100 shown in Figs. 5 and 6 is substantially similar to the surface inspection system 100 shown in Figs. 3 and 4. However, Figs. 5 and 6 illustrate the surface inspection system 100 performing another example image capture cycle.

As shown in Figs. 5 and 6, at a first time T1, the blue-light image sensor line 109A captures an image segment of the surface 102 and both light channel Ch. 4 and light channel Ch. 6 simultaneously emit light directed at the surface 102 at respective angles of incidence. As shown in Fig. 6, light channel Ch. 4 is strobed on and off for only half of the exposure length of the blue-light image sensor line 109A, whereas light channel Ch. 6 is turned on for a duration equal to the exposure length of the blue-light image sensor line 109A. At a second time T2, green-light image sensor line 109B captures an image segment of the surface 102 and both light channel Ch. 3 and light channel Ch. 5 simultaneously emit light to illuminate the surface 102. As shown in Fig. 6, light channel Ch. 3 and light channel Ch. 5 are both turned on for only a fraction of the exposure length of the green-light image sensor line 109B. At a third time T3, red-light image sensor line 109C captures a respective image segment of the surface and light channel Ch. 7 simultaneously emits light directed at the surface 102 at a respective angle of incidence. As shown in Fig. 5, light channel Ch. 7 is disposed behind the surface 102 relative to the image sensor 106 to facilitate back lighting the surface 102 when capturing the respective image segment using the red-light image sensor line 109C. At a fourth time T4, NIR-light image sensor line 109D captures a respective image segment of the surface 102 and both light channels Ch. 1 and Ch. 2 simultaneously emit light directed at the surface 102 at respective angles of incidence. Both light channels Ch. 1 and Ch. 2 are positioned to emit light at relatively high angles of incidence relative to the surface 102 to facilitate bright field lighting of the surface 102 when capturing the respective image segment using the NIR-light image sensor line 109D.

As shown in Fig. 6, in this example, the exposure lengths of the different image sensor lines 109A-D are varied. For example, the red-light image sensor line 109C has a lesser exposure length than the blue-light image sensor line 109A, the green-light image sensor line 109B, and the NIR-light image sensor line 109D. In the example of Fig. 6, the NIR-light image sensor line 109D has the longest exposure length in comparison to the other image sensor lines. As shown in Fig. 6, multiple light sources 110 are utilized to illuminate the surface 102 when capturing the respective image segments using the blue-light image sensor line 109A, the green-light image sensor line 109B, and the NIR-light image sensor line 109D. Additionally, light channel Ch. 4 is only turned on for a fraction of the exposure length of the blue-light image sensor line 109A and light channels Ch. 3 and Ch. 5 are only turned on for a fraction of the exposure length of the green-light image sensor line 109B. Each of the light channels utilized in the image capture cycle illustrated in Fig. 5 may emit any suitable wavelength(s) of light. In some examples, the above-described image capture cycle is repeated a plurality of times at the same time that the image sensor 106 and the surface 102 are moved relative to each other.

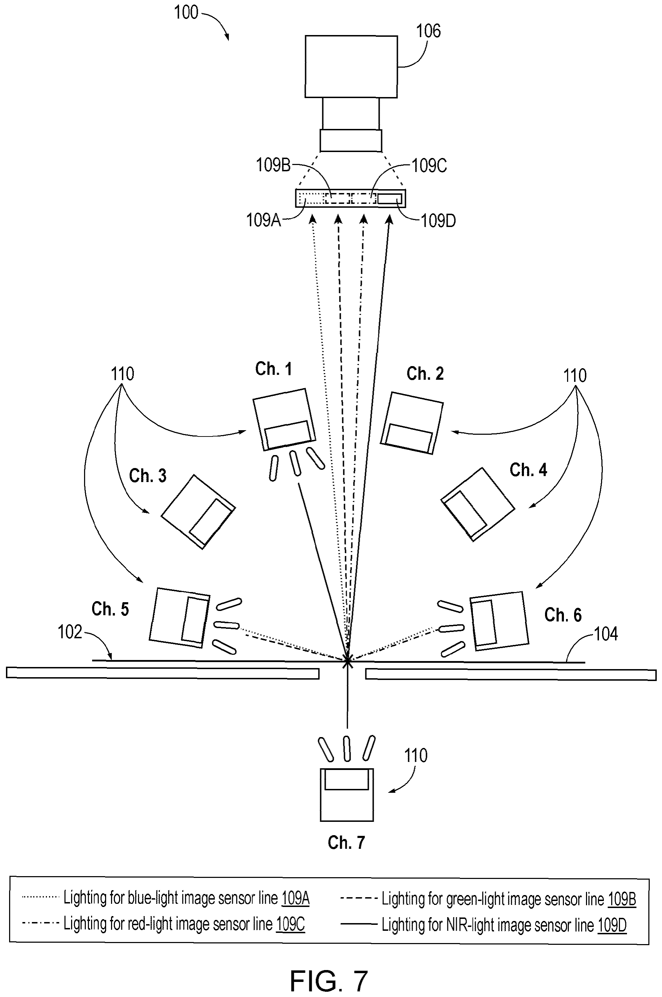

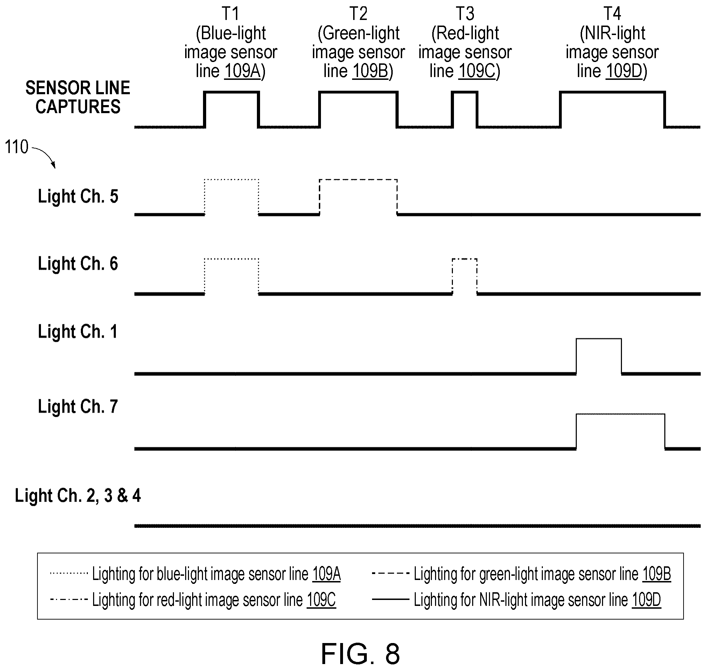

Figs. 7 and 8 illustrate another example surface inspection system 100 substantially similar to the example surface inspection systems of Figs. 3-6. Figs. 7 and 8 illustrate the surface inspection system 100 performing another example image capture cycle. As shown in Figs. 7 and 8, at a first time T1, blue-light image sensor line 109A captures an image segment of the surface 102 and light channels Ch. 5 and Ch. 6 simultaneously illuminate the surface 102. At a later time T2, green-light image sensor line 109B captures an image segment of the surface 102 and light channel Ch. 5 simultaneously emits light to illuminate the surface 102. At a time T3, red-light image sensor line 109C captures an image segment of the surface 102 and light channel Ch. 6 simultaneously emits light to illuminate the surface 102. At a time T4, NIR-light image sensor line 109D captures an image segment of the surface 102 and light channels Ch. 1 and Ch. 7 simultaneously emit light to illuminate the surface 102. As shown in Fig. 8, light channel Ch. 1 is turned on for only a fraction of the exposure length of the NIR-light image sensor line 109D, whereas light channel Ch. 7 is turned on for a duration equal to and coextensive with the exposure length of the NIR-light image sensor line 109D. In some examples, the above-described image capture cycle is repeated a plurality of times at the same time that the image sensor 106 and the surface 102 are moved relative to each other.

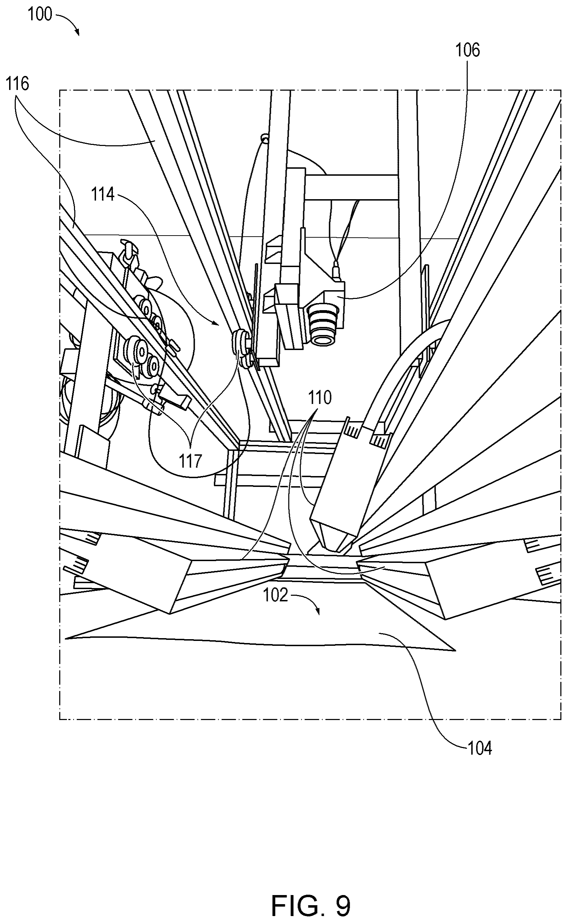

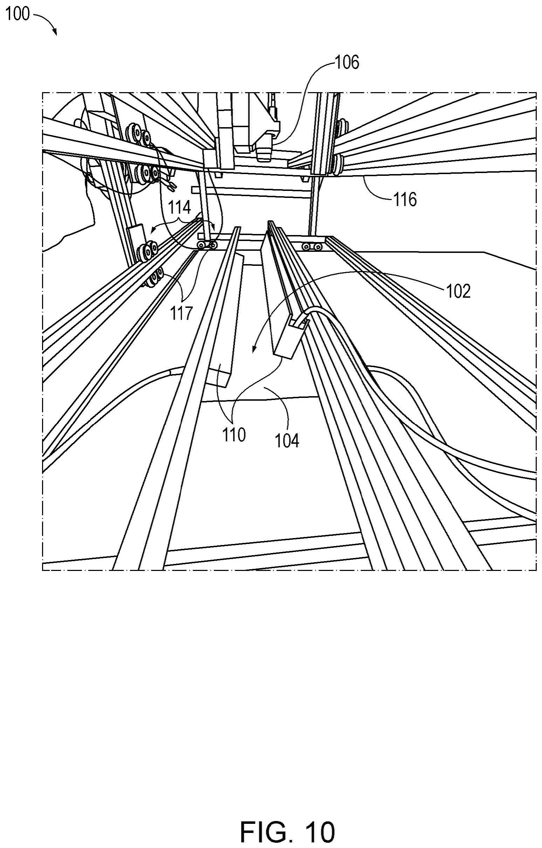

Figs. 9 and 10 illustrate an example surface inspection system 100. The surface inspection system 100 shown in Figs. 9 and 10 includes an image sensor 106 and three light sources 110 operatively coupled to and supported by a support structure 116. The support structure 116 comprises a portion of a movement system 114 configured to facilitate moving the image sensor 106 relative to the surface 102 of the structure 104 being imaged. The image sensor 106 and the three light sources 110 are directed at the surface 102 of the structure 104 to facilitate capturing image segments of the surface 102 and simultaneously lighting the surface 102.

As shown in Figs. 9 and 10, the image sensor 106 is mounted on the support structure 116, such that the image sensor 106 is configured to move on the support structure 116 relative to the surface 102 of the structure 104 being imaged. The support structure 116 includes wheels 117, which facilitate moving the image sensor 106 on the support structure 116 in a first direction relative to the surface 102. Additionally, as shown in Fig. 10, the support structure 116 includes wheels 117 which facilitate the support structure 116 itself moving relative to the surface 102 in a second direction that is different than the first direction. This facilitates scanning the image sensor 106 over the surface 102 in the first direction by moving the image sensor 106 on the support structure 116 and scanning the image sensor 106 over the surface 102 in the second direction by moving the support structure 116 relative to the structure 104 being imaged.

Illustrative, non-exclusive examples of inventive subject matter according to the present disclosure are described in the following enumerated paragraphs:
A. A surface inspection system (100) configured to inspect a surface (102) of a structure (104), the surface inspection system (100) comprising:
   one or more image sensors (106) comprising two or more image sensor lines (108), wherein each image sensor line (108) is configured to independently capture images of the surface (102);
   one or more light sources (110) each configured to emit light at a respective angle of incidence relative to the surface (102); and
   one or more controllers (112) configured to selectively control the one or more image sensors (106) and the one or more light sources (110) to perform an image capture cycle, wherein performing the image capture cycle comprises:
      sequentially triggering each image sensor line (108) of the two or more image sensor lines (108) to capture a respective image segment of the surface (102) using each image sensor line (108); and
      when triggering each image sensor line (108), simultaneously triggering a corresponding configuration of the one or more light sources (110) to illuminate the surface (102) when capturing the respective image segment.
A1. The surface inspection system (100) of paragraph A, further comprising a movement system (114) configured to move one of the structure (104) and the one or more image sensors (106), such that the one or more image sensors (106) and the structure (104) are moved relative to each other.
A1.1. The surface inspection system (100) of paragraph A1, wherein the movement system (114) comprises a support structure (116) supporting the one or more image sensors (106) and the one or more light sources (110), wherein the support structure (116) is configured to selectively move relative to the structure (104).
A1.1.1. The surface inspection system (100) of paragraphs A1.1, wherein the support structure (116) is configured to roll relative to the structure (104).
A1.1.2. The surface inspection system (100) of paragraph A1.1 or A1.1.1, wherein the one or more image sensors (106) are operatively coupled to the support structure (116), such that the one or more image sensors (106) are configured to move on the support structure (116) relative to the surface (102).
A1.2. The surface inspection system (100) of any one of paragraphs A1-A1.1.2, wherein the movement system (114) comprises a conveyer system (118), wherein the structure (104) is disposed on the conveyer system (118), and wherein the conveyer system (118) is configured to selectively translate the structure (104) relative to the one or more image sensors (106).
A1.3. The surface inspection system (100) of any one of paragraphs A1-A1.2, wherein the movement system (114) further comprises an electric motor (120) configured to drive the movement system (114) to move one of the one or more image sensors (106) or the structure (104) relative to the other of the one or more image sensors (106) or the structure (104).
A1.4. The surface inspection system (100) of any one of paragraphs A1-A1.3, wherein the one or more controllers (112) are configured to perform the image capture cycle repeatedly when the movement system (114) moves the one or more image sensors (106) or the structure (104).
A1.5. The surface inspection system (100) of any one of paragraphs A1-A1.4, wherein the movement system (114) further comprises a telemetry system (121) configured to transmit signal pulses to the one or more controllers (112), wherein each of the signal pulses indicates a relative position of the structure (104) and the one or more image sensors (106).
A1.5.1. The surface inspection system (100) of paragraph A1.5, wherein the one or more controllers (112) are configured to trigger each image sensor line (108) to capture the respective image segment and simultaneously trigger the corresponding configuration of the one or more light sources (110) responsive to receiving one or more of the signal pulses from the telemetry system (121).
A1.5.2. The surface inspection system (100) of paragraph A1.5 or A1.5.1, wherein the telemetry system (121) comprises an encoder (122) configured to transmit the signal pulses to the one or more controllers (112).
A2. The surface inspection system (100) of any one of paragraphs A-A1.5.2, wherein each respective image sensor line (108) of the two or more image sensor lines (108) comprises a wavelength sensitivity range comprising a range of wavelengths of light the respective image sensor line (108) is configured to detect.
A2.1. The surface inspection system (100) of paragraph A2, wherein the wavelength sensitivity range of one or more of the two or more image sensor lines (108) peaks within one of a red-light wavelength range (e.g., 600-700 nanometers), a blue-light wavelength range (e.g., 400-500 nanometers), a green-light wavelength range (e.g., 500-600 nanometers), a near infrared wavelength range (e.g., 780-2500 nanometers), or an ultraviolet-light wavelength range (e.g., 250- 400nm).
A2.2. The surface inspection system (100) of paragraph A2 or A2.1, wherein the two or more image sensor lines (108) comprise at least a blue-light image sensor line (109A) having a respective wavelength sensitivity range that peaks within a/the blue-light wavelength range, a green-light image sensor line (109B) having a respective wavelength sensitivity range that peaks within a/the green-light wavelength range, and a red-light image sensor line (109C) having a respective wavelength sensitivity range that peaks within a/the red-light wavelength range.
A2.3. The surface inspection system (100) of any one of paragraphs A2-A2.2, wherein at least one image sensor line (108) of the two or more image sensor lines (108) comprises an NIR-light image sensor line (109D) having a respective wavelength sensitivity range that peaks within an/the near-infrared wavelength range.
A2.4. The surface inspection system (100) of any one of paragraphs A2-A2.3, wherein at least one image sensor line (108) of the two or more image sensor lines (108) comprises an ultraviolet-light image sensor line (109G) having a respective wavelength sensitivity range that is greatest within an/the ultraviolet wavelength range.
A2.5. The surface inspection system (100) of any one of paragraphs A2-A2.4, wherein at least one image sensor line (108) of the two or more image sensor lines (108) comprises a monochromatic image sensor line (109E) having a respective wavelength sensitivity range covering the visible light spectrum including a/the blue-light range, a/the green-light range, and a/the red-light range.
A2.5.1. The surface inspection system (100) of paragraph A2.5, wherein the monochromatic image sensor line (109E) comprises a panchromatic image sensor line (109F) having a respective wavelength sensitivity range covering the visible light spectrum and a/the ultraviolet wavelength range and an infrared wavelength range.
A3. The surface inspection system (100) of any one of paragraphs A-A2.5.1, further comprising an identification sensor (124) configured to identify a type of the structure (104) being inspected.
A3.1. The surface inspection system (100) of paragraph A3, wherein the identification sensor (124) is configured to scan an identifier (128) of the structure (104) to identify the type of the structure (104).
A3.1.1. The surface inspection system (100) of paragraph A3.1, wherein the identifier (128) is one of a barcode or a QR code.
A3.1.2. The surface inspection system (100) of paragraph A3.1 or A3.1.1, wherein the identifier (128) comprises a marking disposed on the surface (102) of the structure (104).
A3.1.3. The surface inspection system (100) of any one of paragraphs A3.1-A3.1.2, wherein the identifier (128) comprises a marking disposed on a structure identification card.
A3.2. The surface inspection system of any one of paragraphs A3-A3.1.2, wherein the identification sensor (124) is one of a barcode scanner, a QR code scanner, and/or a camera.
A4. The surface inspection system (100) of any one of paragraphs A-A3.2, further comprising a memory (130) storing a plurality of image cycle data sets, wherein each image cycle data set corresponds to a specific type of the structure (104), and wherein each image cycle data set comprises computer-executable instructions configured to be executed by the one or more controllers (112) to perform the image capture cycle when inspecting the specific type of the structure (104).
A4.1. The surface inspection system (100) of paragraph A4, wherein each image cycle data set includes a predetermined order in which to sequentially trigger the two or more image sensor lines (108) and the corresponding configuration of the one or more light sources (110) when performing the image capture cycle for the specific type of the structure (104).
A5. The surface inspection system (100) of any one of paragraphs A-A4.1, wherein the one or more light sources (110) comprise at least two light sources (110) configured to emit different wavelengths of light than each other.
A6. The surface inspection system (100) of any one of paragraphs A-A5, wherein one or more of the one or more light sources (110) are configured to emit red light, blue light, green light, infrared light, ultraviolet light, polarized light, or white light.
A7. The surface inspection system (100) of any one of paragraphs A-A6, wherein the corresponding configuration of the one or more light sources when capturing at least one respective image segment comprises a bright field lighting configuration.
A7.1. The surface inspection system (100) of paragraph A7, wherein the bright field lighting configuration comprises the one or more of light sources (110), each of which is configured to emit light at an angle of incidence greater than 45 degrees relative to the surface (102).
A7.1.1. The surface inspection system (100) of paragraph A7.1, wherein at least one of the one or more light sources (110) included in the bright field lighting configuration is disposed on a right side of the image sensor (106).
A7.1.2. The surface inspection system (100) of paragraph A7.1 or A7.1.1, wherein at least one of the one or more light sources (110) included in the bright field lighting configuration is disposed on a left side of the image sensor (106).
A8. The surface inspection system (100) of any one of paragraphs A-A7.1.2, wherein the corresponding configuration of the one or more light sources (110) triggered when capturing at least one respective image segment comprises a dark field lighting configuration.
A8.1. The surface inspection system (100) of paragraph A8, wherein the dark field lighting configuration comprises one or more of the light sources (110), each of which is configured to emit light at an angle of incidence less than 45 degrees relative to the surface (102).
A8.1.1. The surface inspection system (100) of paragraph A8.1, wherein at least one of the one or more light sources (110) included in the dark field lighting configuration is disposed on a right side of the image sensor (106).
A8.1.2. The surface inspection system (100) of paragraph A8.1 or A8.1.1, wherein at least one of the one or more light sources (110) included in the dark field lighting configuration is disposed on a left side of the image sensor (106).
A9. The surface inspection system (100) of any one of paragraphs A-A8.1.2, wherein the corresponding configuration of the one or more light sources (110) triggered when capturing at least one respective image segment comprises at least a first light source (110) configured to emit light at a first angle of incidence relative to the surface (102) greater than 45 degrees and at least a second light source (110) configured to emit light at a second angle of incidence relative to the surface (102) less than 45 degrees.
A10. The surface inspection system (100) of any one of paragraphs A-A9, wherein at least one of the one or more light sources (110) is disposed behind the structure (104) relative to the one or image sensors (106).
A11. The surface inspection system (100) of any one of paragraphs A-A10, wherein at least one of the one or more light sources (110) is disposed in front of the structure (104) relative to the one or more image sensors (106).
A12. The surface inspection system (100) of any one of paragraphs A-A11, wherein the one or more controllers (112) are configured to trigger different corresponding configurations of the one or more light sources (110) when capturing different ones of respective image segments using different ones of the two or more image sensor lines (108).
A13. The surface inspection system (100) of any one of paragraphs A-A12, further comprising a trigger sensor (134) configured to detect when the structure (104) is disposed in an imaging position.
A13.1. The surface inspection system (100) of paragraph A13, wherein the trigger sensor (134) comprises one of an infrared sensor, pressure sensor, conductive sensor, or a laser sensor configured to detect when the structure (104) is disposed in the imaging position.
A13.2. The surface inspection system (100) of paragraph A13 or A13.1, wherein the one or more controllers (112) are configured to perform the image capture cycle in response to the trigger sensor (134) detecting the structure (104) is disposed in the imaging position.
A14. The surface inspection system (100) of any one of paragraphs A-A13.2, wherein the one or more controllers (112) are further configured to perform a plurality of image capture cycles repeatedly when the one or more image sensors (106) and the structure (104) are moved relative to each other, such that each image sensor line (108) of the two or more image sensor lines (108) captures a plurality of respective image segments.
A14.1. The surface inspection system (100) of paragraph A14, further comprising combining the plurality of respective image segments captured by the two or more image sensor lines (108) to form one or more combined images of the structure (104).
A14.1.1. The surface inspection system (100) of paragraph A14.1, further comprising combining the plurality of respective image segments captured by an individual image sensor line of the two or more image sensor lines (108) to form a first combined image of the one or more combined images.
A14.1.2. The surface inspection system (100) of paragraph A14.1 or A14.1.1, further comprising combining the plurality of respective image segments captured by multiple image sensor lines of the two or more image sensor lines (108) to form a second combined image of the one or more combined images.
A14.2. The surface inspection system (100) of any one of paragraphs A14.1-A14.1.2, further comprising utilizing a machine learning model to analyze the one or more combined images to identify defects and/or abnormalities on the surface (102).
A15. The surface inspection system (100) of any one of paragraphs A-A14.2, further comprising a plurality of image sensors (106), wherein each image sensor (106) comprises one or more image sensor lines (108) of the two or more image sensor lines (108), such that the plurality of image sensors (106) collectively comprises the two or more image sensor lines (108).
A15.1. The surface inspection system (100) of paragraph A15, wherein when performing the image capture cycle, the one or more controllers (112) are configured to sequentially trigger the one or more image sensor lines (108) of each image sensor (106) of the plurality of image sensors (106) to capture respective image segments.
A16. The surface inspection system (100) of any one of paragraphs A-A15.1, wherein the one or more controllers (112) comprise a frame grabber (113) configured to sequentially trigger the two or more image sensor lines (108) to capture the respective image segment.
A16.1. The surface inspection system of paragraph A16, wherein the frame grabber (113) is further configured to simultaneously trigger the corresponding configuration of the one or more light sources (110) to illuminate the surface (102) when capturing the respective image segment.
A17. The surface inspection system (100) of any one of paragraphs A-A16.1, wherein the one or more controllers (112) comprise a light trigger controller (138) configured to selectively trigger the corresponding configuration of the one or more light sources (110) to strobe on and off synchronized with the two or more image sensor lines (108) capturing the respective image segment.
A17.1. The surface inspection system (100) of paragraph A17, wherein the light trigger controller (138) is configured to receive control signals from one or more of a/the frame grabber (113), the one or more image sensors (106), and/or a/the telemetry system (121) indicating when to trigger the corresponding configuration of the one or more light sources (110) to strobe on and off.
A18. The surface inspection system (100) of any one of paragraphs A-A17.1, wherein the one or more controllers (112) are configured to adjust an exposure length of each image sensor line (108) of the two or more image sensor lines (108) when capturing the respective image segment.
A19. The surface inspection system (100) of any one of paragraphs A-A18, wherein each of the one or more image sensors (106) comprises a line-scan camera.
A20. The surface inspection system (100) of any one of paragraphs A-A19, further comprising the structure (104) comprising the surface (102).
A20.1. The surface inspection system (100) of paragraph A20, wherein the structure (104) comprises a decorative laminate.
A20.2. The surface inspection system (100) of paragraph A20 or A20.1, wherein the surface (102) is substantially planar.
A21. The surface inspection system (100) of any one of paragraphs A-A20.2, wherein each of the one or more image sensors 106 is configured to capture images of the surface (102) at a respective angle of reflection.
A21.1. The surface inspection system (100) of paragraph A21, wherein the respective angle of reflection of at least one of the one or more image sensors (106) is normal to the surface (102).
A21.2. The surface inspection system (100) of paragraph A21 or A21.1, wherein the respective angle of reflection of at least one of the one or more image sensors (106) is an acute angle relative to the surface (102).
A22. The surface inspection system (100) of any one of paragraphs A-A21.2, wherein the one or more controllers (112) are configured to receive signal pulses from a/the telemetry system (121) indicating that the surface (102) has moved relative to the one or more image sensors (106) by a select distance.
A22.1. The surface inspection system (100) of paragraph A22, wherein the one or more controllers (112) are configured to trigger each image sensor line (108) to capture the respective image segment and simultaneously trigger the corresponding configuration of the one or more light sources (110) responsive to receiving one or more of the signal pulses from the telemetry system (121).
A22.2. The surface inspection system (100) of paragraph A22 or A22.1, wherein the telemetry system (121) comprises an/the encoder (122) configured to transmit the signal pulses to the one or more controllers (112).
B. A method (200) of inspecting a surface (102) of a structure (104), the method (200) comprising:
   performing (210) an image capture cycle using one or more image sensors (106) comprising two or more image sensor lines (108) and one or more light sources (110) directed at the surface (102), wherein performing (210) the image capture cycle comprises:
   sequentially capturing (216) a respective image segment of the surface (102) using each of the two or more image sensor lines (108); and
   during the capturing (216) each respective image segment, simultaneously lighting (218) the surface (102) using a corresponding configuration of the one or more light sources (110).
B1. The method (200) of paragraph B, further comprising scanning (208) the surface (102) using the one or more image sensors (106) by moving one of the structure (104) or the one or more image sensors (106) relative to the other of the one or more image sensors (106) or the structure (104).
B1.1. The method (200) of paragraph B1, further comprising repeatedly performing (210) the image capture cycle when scanning (208) the surface (102) using the one or more image sensors (106).
B1.1.1. The method (200) of paragraph B1.1, wherein repeatedly performing (210) the image capture cycle further comprises:
   measuring (212), by a telemetry system (121), relative movement between the one or more image sensors (106) and the structure (104) during the scanning (208) the surface (102) using the one or more image sensors (106); and
   triggering (214) the capturing (216) of the respective image segments and the lighting (218) of the surface (102) based on the relative movement.
B1.2. The method (200) of any one of paragraphs B1-B1.1.1, wherein scanning (208) the surface (102) comprises translating the one or more image sensors (106) relative to the surface (102).
B1.3. The method (200) of any one of paragraphs B1-B1.2, wherein scanning the surface (102) comprises translating the structure (104) relative to the one or more image sensors (106).
B2. The method (200) of any one of paragraphs B-B1.3, wherein lighting (218) the surface (102) using the corresponding configuration of the one or more light sources (110) comprises:
   turning on the corresponding configuration of the one or more light sources (110) when capturing (216) the respective image segment using a respective one of the two or more image sensor lines (108); and
   turning off the corresponding configuration of the one or more light sources (110) prior to capturing (216) a subsequent image segment using a different one of the two or more image sensor lines (108).
B3. The method (200) of any one of paragraphs B-B2, wherein the corresponding configuration of light sources (110) used when lighting (218) the surface (102) is different when capturing different respective image segments.
B4. The method (200) of any one of paragraphs B-B3, wherein the corresponding configuration of the one or more light sources (110) is specific to the respective image segment being captured and is predetermined based on characteristics of the surface (102) and/or characteristics of a respective one of the two or more image sensor lines (108) capturing the respective image segment.
B5. The method (200) of any one of paragraphs B-B4, further comprising performing (210) a plurality of the image capture cycles, such that each image sensor line (108) of the two or more image sensor lines (108) captures a plurality of respective image segments.
B5.1. The method (200) of paragraph B5, further comprising combining (220) the plurality of respective image segments captured by one or more of the two or more image sensor lines (108) to form one or more combined images of the surface (102).
B5.2. The method of paragraph B5.1, wherein combining (220) the plurality of respective image segments comprises combining the plurality of respective image segments captured by an individual image sensor line (108) of the two or more image sensor lines (108) to form a first combined image of the one or more combined images of the surface (102) captured by the individual image sensor line (108).
B5.3. The method (200) of any one of paragraphs B5-B5.2, wherein combining (220) the plurality of respective image segments further comprises combining the plurality of respective image segments captured by multiple image sensor lines (108) of the two or more image sensor lines (108) to form a second combined image of the one or more combined images of the surface (102).
B5.4. The method (200) of any one of paragraphs B5-B5.3, further comprising analyzing (222) the one or more combined images using one or more trained machine learning models to identify defects and/or abnormalities on the surface (102).
B6. The method (200) of any one of paragraphs B0-B5.2, further comprising, prior to performing the image capture cycle, identifying (202) a type of the structure (104).
B6.1. The method (200) of paragraph B6, wherein identifying (202) the type of the structure (104) comprises scanning an identifier (128) of the structure (104).
B6.2. The method (200) of paragraph B6 or B6.1, in response to identifying (202) the type of the structure (104), determining (204), based on the type of the structure (104), a predetermined order in which to sequentially trigger the two or more image sensor lines (108) to capture (216) the respective image segment and the corresponding configuration of the one or more light sources (110) used when lighting (218) the surface (102) during the capturing (216) of each respective image segment.
B7. The method (200) of any one of paragraphs B-B6.2, further comprising:
   detecting (206) the structure (104) is disposed in an imaging position; and
   in response to detecting (206) the structure (104) is disposed in the imaging position, initiating performing (210) the image capture cycle.
B8. The method (200) of any one of paragraphs B-B7, wherein performing the image capture cycle further comprises triggering (214) the capturing (216) and the lighting (218) in response to receiving one or more signal pulses from a/the telemetry system (121) indicating that the surface (102) has moved relative to the one or more image sensors (106) by a select distance.

As used herein, the terms "adapted" and "configured" mean that the element, component, or other subject matter is designed and/or intended to perform a given function. Thus, the use of the terms "adapted" and "configured" should not be construed to mean that a given element, component, or other subject matter is simply "capable of" performing a given function but that the element, component, and/or other subject matter is specifically selected, created, implemented, utilized, programmed, and/or designed for the purpose of performing the function. It is also within the scope of the present disclosure that elements, components, and/or other recited subject matter that is recited as being adapted to perform a particular function may additionally or alternatively be described as being configured to perform that function, and vice versa. Similarly, subject matter that is recited as being configured to perform a particular function may additionally or alternatively be described as being operative to perform that function.

As used herein, the term "and/or" placed between a first entity and a second entity means one of (1) the first entity, (2) the second entity, and (3) the first entity and the second entity. Multiple entries listed with "and/or" should be construed in the same manner, i.e., "one or more" of the entities so conjoined. Other entities optionally may be present other than the entities specifically identified by the "and/or" clause, whether related or unrelated to those entities specifically identified. Thus, as a non-limiting example, a reference to "A and/or B," when used in conjunction with open-ended language such as "comprising," may refer, in one example, to A only (optionally including entities other than B); in another example, to B only (optionally including entities other than A); in yet another example, to both A and B (optionally including other entities). These entities may refer to elements, actions, structures, steps, operations, values, and the like.

The various disclosed elements of apparatuses and steps of methods disclosed herein are not required to all apparatuses and methods according to the present disclosure, and the present disclosure includes all novel and non-obvious combinations and subcombinations of the various elements and steps disclosed herein. Moreover, one or more of the various elements and steps disclosed herein may define independent inventive subject matter that is separate and apart from the whole of a disclosed apparatus or method. Accordingly, such inventive subject matter is not required to be associated with the specific apparatuses and methods that are expressly disclosed herein, and such inventive subject matter may find utility in apparatuses and/or methods that are not expressly disclosed herein.

## Claims

1. A surface inspection system (100) configured to inspect a surface (102) of a structure (104), the surface inspection system (100) comprising:
one or more image sensors (106) comprising two or more image sensor lines (108), wherein each image sensor line (108) is configured to independently capture images of the surface (102);
one or more light sources (110) each configured to emit light at a respective angle of incidence relative to the surface (102); and
one or more controllers (112) configured to selectively control the one or more image sensors (106) and the one or more light sources (110) to perform an image capture cycle, wherein performing the image capture cycle comprises:
sequentially triggering each image sensor line (108) to capture a respective image segment of the surface (102) using each image sensor line (108); and
when triggering each image sensor line (108), simultaneously triggering a corresponding configuration of the one or more light sources (110) to illuminate the surface (102).

2. The surface inspection system (100) of claim 1, further comprising a movement system (114) configured to move one of the structure (104) and the one or more image sensors (106), such that the one or more image sensors (106) and the structure (104) are moved relative to each other.

3. The surface inspection system (100) of claim 2, wherein the movement system (114) further comprises a telemetry system (121) configured to transmit signal pulses to the one or more controllers (112), wherein each of the signal pulses indicates a relative position of the structure (104) and the one or more image sensors (106),
optionally wherein the one or more controllers (112) are configured to trigger each image sensor line (108) of the two or more image sensor lines (108) to capture the respective image segment and simultaneously trigger the corresponding configuration of the one or more light sources (110) responsive to receiving one or more signal pulses from the telemetry system (121).

4. The surface inspection system (100) of any of the preceding claims, wherein each respective image sensor line (108) of the two or more image sensor lines (108) comprises a wavelength sensitivity range comprising a range of wavelengths of light the respective image sensor line (108) is configured to detect,
optionally wherein the two or more image sensor lines (108) comprise one or more of a blue-light image sensor line (109A) having a respective wavelength sensitivity range that peaks within a blue-light wavelength range, a green-light image sensor line (109B) having a respective wavelength sensitivity range that peaks within a green-light wavelength range, and a red-light image sensor line (109C) having a respective wavelength sensitivity range that peaks within a red-light wavelength range,
optionally wherein at least one image sensor line (108) of the two or more image sensor lines (108) comprises an NIR-light image sensor line (109D) having a respective wavelength sensitivity range that peaks within a near-infrared wavelength range.

5. The surface inspection system (100) of any of the preceding claims, further comprising a memory (130) storing a plurality of image cycle data sets, wherein each image cycle data set corresponds to a specific type of the structure (104), and wherein each image cycle data set comprises computer-executable instructions configured to be executed by the one or more controllers (112) to perform the image capture cycle when inspecting the specific type of the structure (104).

6. The surface inspection system (100) of any of the preceding claims, wherein the one or more controllers (112) are configured to trigger different corresponding configurations of the one or more light sources (110) when capturing different ones of the respective image segments using different ones of the two or more image sensor lines (108).

7. The surface inspection system (100) of any of the preceding claims, wherein the one or more controllers (112) are further configured to perform a plurality of the image capture cycles repeatedly when the one or more image sensors (106) and the structure (104) are moved relative to each other, such that each image sensor line (108) of the two or more image sensor lines (108) captures a respective plurality of respective image segments.

8. A method (200) of inspecting a surface (102) of a structure (104), the method (200) comprising:
performing (210) an image capture cycle using one or more image sensors (106) comprising two or more image sensor lines (108) and one or more light sources (110) directed at the surface (102), wherein performing (210) the image capture cycle comprises:
sequentially capturing (216) a respective image segment of the surface (102) using each of the two or more image sensor lines (108); and
during the capturing (216) of each respective image segment, simultaneously lighting (218) the surface (102) using a corresponding configuration of the one or more light sources (110).

9. The method (200) of claim 8, further comprising scanning (208) the surface (102) using the one or more image sensors (106) by moving one of the structure (104) or the one or more image sensors (106) relative to the other of the one or more image sensors (106) or the structure (104).

10. The method (200) of claim 9, further comprising repeatedly performing (210) the image capture cycle when scanning the surface (102) using the one or more image sensors (106),
optionally wherein repeatedly performing (210) the image capture cycle further comprises:
measuring (212), by a telemetry system (121), relative movement between the one or more image sensors (106) and the structure (104) when scanning (208) the surface (102) using the one or more image sensors (106); and
triggering (214) the capturing (216) of the respective image segment and the lighting (218) the surface (102) based on the relative movement.

11. The method (200) of any of claims 8-10, further comprising, prior to performing (210) the image capture cycle, identifying (202) a type of the structure (104),

12. The method (200) of claim 11, wherein identifying (202) the type of the structure (104) comprises scanning an identifier (128) of the structure (104).

13. The method (200) of claim 11 or 12, further comprising, in response to identifying (202) the type of the structure (104), determining (204), based on the type of the structure, a predetermined order in which to sequentially trigger the two or more image sensor lines (108) to capture (216) the respective image segment and the corresponding configuration of the one or more light sources (110) used when lighting (218) the surface (204) during the capturing (216) of each respective image segment.

14. The method (200) of any of claims 8-13, further comprising performing (210) a plurality of image capture cycles, such that each image sensor line (108) of the two or more image sensor lines (108) captures a plurality of respective image segments,
optionally further comprising combining (220) the plurality of respective image segments captured by one or more of the two or more image sensor lines (108) to form one or more combined images of the surface (102).

15. The method (200) of any of claims 8-14, further comprising:
detecting (206) the structure (104) is disposed in an imaging position; and
in response to detecting (206) the structure is disposed in the imaging position, initiating performing (210) the image capture cycle.
